# EUROPEAN PATENT APPLICATION

(11) **EP 1 803 756 A1**
(43) Date of publication of application: **04.07.2007**
(21) Application number: 05785571.0
(22) Date of filing: 20.09.2005
(51) Int. Cl.: C08G 18/48, C08G 18/10, C08G 18/36, B01D 63/00, B01D 69/08, B01D 71/54, C09K 3/10

(54) **POLYURETHANE RESIN FORMING COMPOSITION, PROCESS FOR PRODUCTION OF SEALANT, AND PROCESS FOR PRODUCTION OF HOLLOW-FIBER MEMBRANE MODULES**

(30) Priority: 19.10.2004 JP 2004303894
(71) Applicant: Nippon Polyurethane Industry Co., Ltd., Tokyo 108-0014 (JP)
(72) Inventor: ITOH, Shyogo, Nippon Polyurethane Industry Co. Ltd, Yokohama-shi, Kanagawa 2450052 (JP); YAMATO, Kouji, Nippon Polyurethane Industry Co.Ltd, Yokohama-shi, Kanagawa 2450052 (JP)
(74) Representative: Grünecker, Kinkeldey, Stockmair & Schwanhäusser Anwaltssozietät
(86) International application number: PCT/JP2005/017263
(87) International publication number: WO 2006/043386

(57) **Abstract**

A polyurethane resin forming composition comprising a chief ingredient (A) containing an isocyanate component, and a curing agent (B) containing a polyol component, wherein an isocyanate group-terminated prepolymer obtained by reacting an isocyanate group-containing compound (a1) with a polyfunctional polyether polyol (b1) obtained by using, as an initiator, a compound having a functionality of at least 6 is contained as the constituent of the chief ingredient (A); and a castor oil-modified polyol (b2) obtained from castor oil and/or a castor oil fatty acid and a trimethylolalkane is contained as the constituent of the curing agent (B). This composition has such a long pot life as to be applicable to the production of large-sized hollow-fiber membrane modules and can form cured resins excellent in adhesiveness and heat resistance, low in the temperature dependence of hardness and, in particular, extremely little in the amount of matter dissolved out in water when immersed in the water.

## Description

### TECHNICAL FIELD

The present invention relates to a polyurethane resin forming composition, a process for production of a sealant, and a process for production of a hollow-fiber membrane module, and particularly to a polyurethane resin forming composition, which can form cured resins excellent in heat resistance and the like, low in the temperature dependence of hardness, and extremely little in the amount of matter dissolved out in water when immersed in the water, a process for production of a sealant by curing the composition, and a process for production of a hollow-fiber membrane module, comprising the step of sealing gaps between hollow-fiber membranes at an end portion of a bundle of a plurality of hollow-fiber membranes with the sealant obtained by curing the composition.

### BACKGROUND ART

In general, it is widely known to use polyurethane resins excellent in flexibility at ordinary temperature, adhesiveness and chemical resistance as sealants for hollow-fiber membrane modules (hollow-fiber membrane type filter devices) making up blood treaters, water purifiers or industrial water treatment plants.

In recent years, the hollow-fiber membrane module has tended to be enlarged day after day in an industrial water treatment plant in particular with a background of a demand for more improvement in throughput capacity. Therefore, a sealant used has also been required to meet the enlargement of the hollow-fiber membrane module.

As a composition for obtaining a sealant for a membrane module making up a blood treater or water purifier, there has heretofore been proposed a polyurethane resin forming composition making use of an amine type polyol as a constituent of a curing agent (see, for example, Patent Art. 1).
However, this polyurethane resin forming composition cannot be applied to production of a large-sized hollow-fiber membrane module because it is too high in curing rate. Therefore, the composition is insufficient to be put to practical use in industrial water treatment plants in particular.

As a composition for obtaining a sealant for membrane modules making up a blood treater or water purifier, there has also been proposed a polyurethane resin forming composition making combined use of an amine type polyol and a polyoxyalkylene compound having a specific active hydrogen-containing group as constituents of a curing agent (see, for example, Patent Art. 2).
However, a sealant obtained from this polyurethane resin forming composition is poor in heat resistance and great in the amount of matter dissolved out in water when immersed in the water. Therefore, the composition is insufficient to be put to practical use in industrial water treatment plants in particular.

As a composition for obtaining a sealant for a hollow-fiber membrane module, there has further been proposed a polyurethane resin forming composition making use of a polyether polyol having a nominal functionality of at least 6 as a constituent of a curing agent (see, for example, Patent Art. 3).
However, a sealant obtained from this polyurethane resin forming composition is great in the amount of matter dissolved out in water when immersed in the water. Therefore, the composition is insufficient to be put to practical use in industrial water treatment plants in particular.

In addition, as a composition for obtaining a sealant for membrane modules, there has still further been proposed a polyurethane resin forming composition making use of a prepolymer obtained from an excess amount of an organic polyisocyanate and an alkylene (having 2 to 5 carbon atoms) glycol having at least one methyl group at a side chain as a constituent of a chief ingredient (see, for example, Patent Art. 4).
However, a sealant obtained from this polyurethane resin forming composition is poor in heat resistance. Therefore, the composition is insufficient to be put to practical use in industrial water treatment plants in particular.

As described above, all the sealants obtained from the conventionally known polyurethane resin forming compositions are insufficient to be put to practical use in industrial water treatment plants made up by large-sized hollow-fiber membrane modules, and there is thus a strong demand for providing a sealant (a polyurethane resin forming composition for obtaining such a sealant) capable of being put to practical use in such applications.
Patent Art. 1: Japanese Patent Application Laid-Open No. 6-100649 (pages 2 to 4)
Patent Art. 2: Japanese Patent Application Laid-Open No. 2000-128952 (pages 2 to 4)
Patent Art. 3: Japanese Patent Application Laid-Open No. 2002-128858 (pages 2 to 5)
Patent Art. 4: Japanese Patent Application Laid-Open No. 9-48835 (pages 2 to 4)

### DISCLOSURE OF THE INVENTION

### PROBLEMS SOUGHT FOR SOLUTION BY THE INVENTION

The present invention has been made taking into account the above-describe background.
It is a first object of the present invention to provide a polyurethane resin forming composition, which has such a long pot life as to be applicable to the production of large-sized hollow-fiber membrane modules and can form cured resins excellent in adhesiveness and heat resistance, low in the temperature dependence of hardness and, in particular, extremely little in the amount of matter dissolved out in water when immersed in the water.

A second object of the present invention is to provide a process for production of a sealant, which can produce sealants that can meet large-sized hollow-fiber membrane modules, and are excellent in adhesiveness and heat resistance, low in the temperature dependence of hardness and, in particular, extremely little in the amount of matter dissolved out in water when immersed in the water.

A third object of the present invention is to provide a process for production of a hollow-fiber membrane module excellent in productivity and durability, which comprises sealing gaps between hollow-fiber membranes at an end portion of a bundle of a plurality of hollow-fiber membranes with a sealant excellent in adhesiveness and heat resistance, low in the temperature dependence of hardness and, in particular, extremely little in the amount of matter dissolved out in water when immersed in the water.

### MEANS FOR THE SOLUTION OF THE PROBLEMS

A polyurethane resin forming composition according to the present invention (first invention) is a polyurethane resin forming composition comprising a chief ingredient (A) containing an isocyanate component, and a curing agent (B) containing a polyol component, wherein an isocyanate group-terminated prepolymer obtained by reacting an isocyanate group-containing compound (a1) with a polyfunctional polyether polyol (b1) obtained by using, as an initiator, a compound having a functionality of at least 6 is contained as the isocyanate component making up the chief ingredient (A), and a castor oil-modified polyol (b2) obtained from castor oil and/or a castor oil fatty acid and a trimethylolalkane is contained as the polyol component making up the curing agent (B).

Another polyurethane resin forming composition according to the present invention (second invention) is a polyurethane resin forming composition comprising a chief ingredient (A) containing an isocyanate component, and a curing agent (B) containing a polyol component, wherein an isocyanate group-terminated prepolymer obtained by reacting an isocyanate group-containing compound (a1); a polyfunctional polyether polyol (b1) obtained by using, as an initiator, a compound having a functionality of at least 6; and other polyol(s) (b3) is contained as the isocyanate component making up the chief ingredient (A), and a castor oil-modified polyol (b2) obtained from castor oil and/or a castor oil fatty acid and a trimethylolalkane is contained as the polyol component making up the curing agent (B).

At least a part of "the other polyol(s) (b3)" used for obtaining the isocyanate group-terminated prepolymer may preferably be the castor oil-modified polyol (b2).

A process for production of a sealant according to the present invention comprises curing the polyurethane resin forming composition according to the present invention.

A process for production of a hollow-fiber membrane module according to the present invention comprises the step of sealing gaps between hollow-fiber membranes at an end portion of a bundle of a plurality of hollow-fiber membranes with a sealant obtained by curing the polyurethane resin forming composition according to the present invention.

### EFFECTS OF THE INVENTION

(1) The polyurethane resin forming compositions according to the present invention have a long pot life and thus can be applied to production of large-sized hollow-fiber membrane modules (hollow-fiber membrane type filter devices) making up industrial water treatment plants, and the compositions are also excellent in molding and processing ability.
According to the polyurethane resin forming compositions of the present invention, there can be formed cured resins excellent in adhesiveness and heat resistance, low in the temperature dependence of hardness (little in change of hardness by the temperature in a wide temperature range) and, in particular, extremely little in the amount of matter dissolved out in water when immersed in the water (extremely excellent in low soluble matter-containing property).

(2) The sealants obtained by the production process according to the present invention can meet large-sized hollow-fiber membrane modules because they are obtained from the compositions of the present invention having a long pot life.
The sealants obtained by the production process according to the present invention are excellent in adhesiveness, so that high adhesive force is gained between the sealant and a housing base material of a filter device, and moreover an end portion of a bundle of a plurality of hollow-fiber membranes can be strongly banded.
The sealants obtained by the production process according to the present invention are excellent in heat resistance, so that the adhesive force to the base material can be retained at a high level even when they are subjected to a steam sterilization treatment.
The sealants obtained by the production process according to the present invention are low in the temperature dependence of hardness, so that sealing performance can be surely secured in a wide temperature range.
Even when the sealants obtained by the production process according to the present invention are brought into contact with water, an amount of matter dissolved out in the water is extremely little.

(3) The hollow-fiber membrane module obtained by the production process according to the present invention has excellent performance as a filter device and is also excellent in productivity and durability. According to the production process of the present invention, even such a large-sized hollow-fiber membrane module as makes up a large-scale industrial water treatment plant can be produced with certainty.

### BEST MODE FOR CARRYING OUT THE INVENTION

The present invention will hereinafter be described in more detail.

### <Polyurethane resin forming composition>

The compositions according to the present invention comprise a chief ingredient (A) containing an isocyanate component and a curing agent (B) containing a polyol component.

### <Chief ingredient (A)>

The chief ingredient (A) of the compositions according to the present invention contain, as the isocyanate component, at least one prepolymer having an isocyanate group at a terminal thereof, which is selected from
(1) an isocyanate group-terminated prepolymer (hereinafter also referred to as "isocyanate group-terminated prepolymer [I]") obtained by reacting an isocyanate group-containing compound (a1) with a polyfunctional polyether polyol (b1); and
(2) an isocyanate group-terminated prepolymer (hereinafter also referred to as "isocyanate group-terminated prepolymer [II]") obtained by reacting an isocyanate group-containing compound (a1) with a polyfunctional polyether polyol (b1) and other polyol (s) (b3).

(1) Isocyanate group-containing compound (a1):
The isocyanate group-containing compound (a1) used for obtaining the isocyanate group-terminated prepolymers is a compound having an isocyanate group in its molecule, and as examples thereof, may be mentioned aliphatic isocyanates having 2 to 18 carbon atoms (excluding carbon atoms in the isocyanate group; the same shall apply hereinafter), alicyclic isocyanates having 4 to 15 carbon atoms, aromatic isocyanates having 6 to 20 carbon atoms, and aromatic aliphatic isocyanates having 8 to 15 carbon atoms.

Compounds obtained by subjecting a part or all of isocyanate groups in a series of these isocyanates to modification such as isocyanurate modification, biuret modification, allophanate modification, urethodione modification, urethone imine modification, carbodiimide modification, oxazolidone modification, amide modification or imide modification may also be mentioned.

As examples of the aliphatic isocyanates having 2 to 18 carbon atoms, may be mentioned ethylene diisocyanate, tetramethylene diisocyanate, hexamethylene diisocyanate, dodecamethylene diisocyanate, 1,6,11-undecatriisocyanate, 2,2,4-trimethylhexamethylene diisocyanate, lysine diisocyanate, 2,6-diisocyanatomethyl caproate, bis(2-isocyanatoethyl) fumarate, bis(2-isocyanatoethyl) carbonate and 2-isocyanatoethyl-2,6-diisocyanatohexanoate.

As examples of the alicyclic isocyanates having 4 to 15 carbon atoms, may be mentioned isophorone diisocyanate, dicyclohexylmethane diisocyanate, cyclohexylene diisocyanate, methylcyclohexylene diisocyanate and bis(2-isocyanatoethyl)-4-cyclohexene-1,2-dicarboxylate.

As examples of the aromatic isocyanates having 6 to 20 carbon atoms, may be mentioned 2,4-toluene diisocyanate, 2,6-toluene diisocyanate, diphenylmethane diisocyanate (4,4'-diphenylmethane diisocyanate, 2,4'-diphenylmethane diisocyanate, 2,2'-diphenylmethane diisocyanate and mixtures thereof; hereinafter abbreviated as "MDI"), naphthalene diisocyanate and polymethylenepolyphenyl polyisocyanates having at least 3 benzene rings.

As examples of the aromatic aliphatic isocyanates, may be mentioned xylylene diisocyanate, α,α,α',α'-tetramethylxylylene diisocyanate and diisocyanatoethylbenzene.

In the present invention, a compound obtained by subjecting the aromatic isocyanate or a part of the aromatic isocyanate to any of a series of the above-described modifications is preferably used as the isocyanate group-containing compound (a1). In particular, a compound obtained by subjecting MDI or a part of MDI to any of a series of the above-described modifications is more preferably used. Among others, a compound obtained by subjecting MDI or a part of MDI to carbodiimide modification is particularly preferably used from the viewpoints of, for example, permitting the formation of a cured resin excellent in the working environment upon molding and good in physical properties (for example, mechanical strength such as hardness) required of sealants.

(2) Polyfunctional polyether polyol (b1):
The polyfunctional polyether polyol (b1) used for obtaining the isocyanate group-terminated prepolymers is a polyether polyol obtained by using, as an initiator, a compound having a functionality of at least 6 and adding an alkylene oxide thereto.
As examples of "the compound having a functionality of at least 6", may be mentioned compounds having at least 6 active hydrogen atoms, such as sorbitol, mannitol, dulcitol and sucrose. Among these, sorbitol and sucrose are preferred.
As examples of "the alkylene oxide" added, may be mentioned alkylene oxides having 2 to 4 carbon atoms, such as ethylene oxide, propylene oxide and butylene oxide.

Polyether polyols obtained by using, as an initiator, sorbitol or sucrose and adding propylene oxide thereto are preferably used as the polyfunctional polyether polyol (b1) from the viewpoint of giving a composition (a composition according to the present invention) obtained by mixing the chief ingredient (A) and the curing agent (B) a viscosity suitable for forming a sealant. Among these, a polyether polyol obtained by using, as an initiator, sucrose and adding propylene oxide thereto is particularly preferably used from the viewpoint of permitting the formation of a cured resin (a sealant extremely excellent in low soluble matter-containing property) extremely little in the amount of matter dissolved out in water from the resulting composition.

The number average molecular weight of the polyfunctional polyether polyol (b1) is preferably 120 to 3,000, more preferably 300 to 1,000. According to a composition obtained by using a polyfunctional polyether polyol (b1) having a number average molecular weight of 300 to 1,000, a cured resin (sealant) excellent in heat resistance and extremely little in the amount of matter dissolved out in water can be formed.

The hydroxyl value of the polyfunctional polyether polyol (b1) is preferably 110 to 2,800 mg KOH/g, more preferably 300 to 1,100 mg KOH/g. According to a composition obtained by using a polyfunctional polyether polyol (b1) having a hydroxyl value of 300 to 1,100 mg KOH/g, a cured resin (sealant) excellent in heat resistance and extremely little in the amount of matter dissolved out in water can be formed.

In the reaction for obtaining the isocyanate group-terminated prepolymer [I], an equivalent ratio (isocyanate group/active hydrogen group) of the isocyanate group contained in the isocyanate group-containing compound (a1) to the active hydrogen group contained in the polyfunctional polyether polyol (b1) is generally 1.1 to 130.0, preferably 3.0 to 90.0, more preferably 5.0 to 80.0. By controlling the equivalent ratio (isocyanate group/active hydrogen group) to 5.0 to 80.0, a composition far excellent in the molding and processing ability upon the formation of a sealant (upon the formation of a hollow-fiber membrane module) can be obtained. Incidentally, the reaction for obtaining the isocyanate group-terminated prepolymer [I] is a urethanation reaction ordinarily conducted.

The isocyanate group content in the isocyanate group-terminated prepolymer [I] is generally 8 to 30% by mass, preferably 10 to 28% by mass, more preferably 13 to 26% by mass. By using an isocyanate group-terminated prepolymer [I] having an isocyanate group content of 13 to 26% by mass, a composition far excellent in the molding and processing ability upon the formation of a sealant (upon the formation of a hollow-fiber membrane module) can be obtained.

(3) Other polyols (b3):
In the isocyanate group-terminated prepolymer [II], the other polyols (b3) that are compounds having at least 2 active hydrogen atoms are used together with the polyfunctional polyether polyol (b1).
By using the isocyanate group-terminated prepolymer [II] obtained by using the other polyol(s) (b3) in combination, a composition far excellent in the molding and processing ability upon the formation of a sealant (upon the formation of a hollow-fiber membrane module) can be obtained.

As examples of "the other polyols (b3)", may be mentioned low-molecular polyols, polyether polyols (excluding polyfunctional polyether polyols (b1)), polyester polyols, polylactone polyols, castor oil polyols and polyolefin polyols. These compounds may be used either singly or in any combination thereof.

Examples of "low-molecular polyols" include dihydric polyols (low-molecular glycol) such as ethylene glycol, diethylene glycol, propylene glycol, 1,2-, 1,3- or 1,4-butanediol, 1,5-pentanediol, 3,-methyl-1,5-pentanediol, 1,6-hexane glycol, 1,8-octanediol, 1,10-decanediol, neopentyl glycol and hydrogenated bisphenol A; and trihydric to octahydric polyols such as glycerol, trimethylolpropane, hexanetriol, pentaerythritol and sorbitol.
The molecular weights of the low-molecular polyols are generally 50 to 200.

Examples of "polyether polyols (excluding polyfunctional polyether polyols (b1))" include polymers obtained by using, as an initiator, any of the above-mentioned low-molecular polyols and adding an alkylene oxide (for example, an alkylene oxide having 2 to 4 carbon atoms, such as ethylene oxide, propylene oxide or butylene oxide) thereto. Specific examples thereof include polypropylene glycol, polyethylene glycol, PTMG and chipped ethers that are copolymers of ethylene oxide and propylene oxide.
The molecular weights of the polyether polyols are generally 200 to 7,000, preferably 500 to 5,000. By using a polyether polyol having a molecular weight of 500 to 5,000, a composition far excellent in the molding and processing ability upon the formation of a sealant (upon the formation of a hollow-fiber membrane module) can be obtained.

Examples of "polyester polyols" include polyols obtained by condensation polymerization of a polycarboxylic acid (an aliphatic saturated or unsaturated polycarboxylic acid, azelaic acid, dodecanoic acid, maleic acid, fumaric acid, ricinolic acid, a linoleic acid dimer and/or an aromatic polycarboxylic acid, for example, phthalic acid, isophthalic acid or terephthalic acid) with a polyol (the above-described low-molecular polyol and/or polyether polyol).
The molecular weights of the polyester polyols are generally 200 to 5,000, preferably 500 to 3,000. By using a polyester polyol having a molecular weight of 500 to 3,000, a composition far excellent in the molding and processing ability upon the formation of a sealant (upon the formation of a hollow-fiber membrane module) can be obtained.

Examples of "polylactone polyols" include polyols obtained by addition polymerization of an initiator such as a glycol or triol with ε-caprolactone, α-methyl-ε-caprolactone or ε-methyl-ε-caprolactone or the like and/or β-methyl-δ-valerolactone or the like in the presence of a catalyst such as an organometallic compound, metal chelate compound or fatty acid metal acyl compound.
The molecular weights of the polylactone polyols are generally 200 to 5,000, preferably 500 to 3,000. By using a polylactone polyol having a molecular weight of 500 to 3,000, a composition far excellent in the molding and processing ability upon the formation of a sealant (upon the formation of a hollow-fiber membrane module) can be obtained.

Examples of "castor oil polyols" include castor oil (triglyceride of castor oil fatty acid); linear or branched polyesters obtained by a reaction of a castor oil fatty acid with a polyol (the above-described low-molecular polyol and/or polyether polyol), for example, diglycerides and monoglycerides of castor oil fatty acids, mono-, di- or triesters of castor oil fatty acids with a trimethylolalkane, and mono-, di- or triesters of castor oil fatty acids with polypropylene glycol.
The molecular weights of the castor oil polyols are generally 300 to 4,000, preferably 500 to 3,000. By using a castor oil polyol having a molecular weight of 500 to 3,000, a composition far excellent in the molding and processing ability upon the formation of a sealant (upon the formation of a hollow-fiber membrane module) can be obtained.

Examples of "polyolefin polyols" include polybutadiene-based polyols obtained by introducing a hydroxyl group into a terminal of polybutadiene or a copolymer of butadiene and styrene or acrylonitrile.

Besides the above, polyether ester polyols obtained by an addition reaction of a polyester having a carboxyl group and/or OH group at its terminal with an alkylene oxide, for example, ethylene oxide or propylene oxide may be mentioned.

Among the above-described polyols, polyester polyols and castor oil polyols are preferred. Among others, castor oil polyols are particularly preferred. In particular, a compound corresponding to the castor oil-modified polyol (b2) used as an essential component for the curing agent (B) is preferred as the other polyol (b3).
According to a composition obtained by using a castor oil polyol (particularly, the castor oil-modified polyol (b2)) as the other polyol (b3), a cured resin excellent in the working environment upon molding and good in physical properties required of sealants can be formed, and moreover improvements in the productivity of a sealant, and in its turn the productivity of hollow-fiber membrane modules (filter devices) can also be made.

The hydroxyl values of the other polyols (b3) are preferably 20 to 1,500 mg KOH/g, more preferably 100 to 1,300 mg KOH/g. By using any other polyol (b3) having a hydroxyl value of 100 to 1,300 mg KOH/g, an isocyanate group-terminated prepolymer [II] having a viscosity suitable for working as the chief ingredient can be obtained. At the same time, according to the resulting composition, a cured resin (sealant) excellent in heat resistance can be formed.

A mass ratio [(b1)/(b3)] of the polyfunctional polyether polyol (b1) to the other polyol(s)(b3) used for obtaining the isocyanate group-terminated prepolymer [II] is preferably 1/99 to 99/1, more preferably 5/95 to 80/20, particularly preferably 10/90 to 60/40.
By controlling the mass ratio [(b1)/(b3)] to 10/90 to 60/40, an isocyanate group-terminated prepolymer [II] having a viscosity suitable for working as the chief ingredient can be obtained. At the same time, according to the resulting composition, a cured resin (sealant) excellent in heat resistance can be formed.

In the reaction for obtaining the isocyanate group-terminated prepolymer [II], an equivalent ratio (isocyanate group/active hydrogen group) of the isocyanate group contained in the isocyanate group-containing compound (a1) to the active hydrogen groups contained in the polyfunctional polyether polyol (b1) and the other polyol(s) (b3) is generally 1.1 to 130.0, preferably 3.0 to 90.0, more preferably 5.0 to 80.0. By controlling the equivalent ratio (isocyanate group/active hydrogen group) to 5.0 to 80.0, a composition far excellent in the molding and processing ability upon the formation of a sealant (upon the formation of a hollow-fiber membrane module) can be obtained. Incidentally, the reaction for obtaining the isocyanate group-terminated prepolymer [II] is a urethanation reaction ordinarily conducted.

The isocyanate group content in the isocyanate group-terminated prepolymer [II] is generally 8 to 25% by mass, preferably 10 to 24% by mass, more preferably 13 to 23% by mass. By using an isocyanate group-terminated prepolymer [II] having an isocyanate group content of 13 to 23% by mass, a composition far excellent in the molding and processing ability upon the formation of a sealant (upon the formation of a hollow-fiber membrane module) can be obtained.

### <Isocyanate group-terminated prepolymer>

The isocyanate group-terminated prepolymer [I] and/or isocyanate group-terminated prepolymer [II] obtained by using the polyfunctional polyether polyol (b1) is contained as the isocyanate component making up the chief ingredient (A), whereby the resulting compositions according to the present invention have a long pot life, and a reaction upon curing moderately progresses. Accordingly, such a composition can also be applied to the production of large-sized hollow-fiber membrane modules (hollow-fiber membrane type filter devices) making up an industrial water treatment plant.
In addition, a cured resin (sealant) formed by the composition according to the present invention is low in the temperature dependence of hardness (little in change of hardness by the temperature in a wide temperature range). Furthermore, hollow-fiber membrane modules (hollow-fiber membrane type filter devices) produced by using the composition according to the present invention are also low in the temperature dependence (change of flow rate by the temperature) of filtration flow rate and the temperature dependency (change of fraction performance by the temperature) of fraction performance of the hollow-fiber membranes.
If an isocyanate group-terminated prepolymer obtained by using no polyfunctional polyether polyol (b1) is used as the chief ingredient, a cured resin low in the temperature dependency of hardness cannot be formed even if the curing agent (B) containing the castor oil-modified polyol (b2) is used (see Comparative Example 1 which will be described subsequently).

In the compositions according to the present invention, the polyfunctional polyether polyol (b1) is used as a raw material for obtaining the isocyanate group-terminated prepolymer making up the chief ingredient (A), so that cured resins extremely little in the amount of matter dissolved out in water when immersed in the water (extremely excellent in low soluble matter-containing property and good in non-staining property) can be formed. Accordingly, the amount of the polyfunctional polyether polyol (b1) introduced can be increased. As a result, the temperature dependence of hardness in a cured resin (sealant) formed by the resulting composition can be lowered with certainty.
According to a composition using the polyfunctional polyether polyol (b1) only as a constituent of the curing agent, the temperature dependence of hardness in a cured resin to be formed cannot be sufficiently lowered (see Comparative Examples 4 and 5 which will be described subsequently), and the amount of matter dissolved out in water when the cured resin formed is immersed in the water cannot be controlled (see Comparative Examples 2 to 5 which will be described subsequently).

### <Curing agent (B)>

The curing agent (B) in the compositions according to the present invention contains, as a polyol component, a castor oil-modified polyol (b2) obtained from castor oil and/or a castor oil fatty acid and a trimethylolalkane.

(1) Castor oil-modified polyol (b2):
The castor oil-modified polyol (b2) is a modified product (trimethylolalkane-modified product of castor oil and/or trimethylolalkane-modified product of castor oil fatty acid) obtained from castor oil and/or a castor oil fatty acid and a trimethylolalkane.
The castor oil-modified polyol (b2) can be obtained by a transesterification reaction of castor oil and a trimethylolalkane; or an esterification reaction of a castor oil fatty acid and a trimethylolalkane.
A main component of "castor oil" is a triglyceride of ricinolic acid, and "castor oil" includes hydrogenated castor oil.
On the other hand, a main component of "castor oil fatty acid" is ricinolic acid, and "castor oil fatty acid" includes hydrogenated castor oil fatty acid.
As examples of "trimethylolalkane", may be mentioned trimethylolmethane, trimethylolethane, trimethylolpropane, primethylolbutane, trimethylol-pentane, trimethylolhexane, trimethylolheptane, trimethyloloctane, trimethylolnonane and trimethyloldecane.

The number average molecular weight of the castor oil-modified polyol (b2) is preferably 150 to 2,000, more preferably 300 to 1,200. According to a composition obtained by using a castor oil-modified polyol (b2) having a number average molecular weight of 300 to 1,200, a cured resin good in physical properties (particularly, mechanical properties) required of sealants can be formed.

The average hydroxyl value of the castor oil-modified polyol (b2) is preferably 80 to 1,600 (mg KOH/g), more preferably 120 to 600 (mg KOH/g), particularly preferably 300 to 400 (mg KOH/g).
According to a composition obtained by using a castor oil-modified polyol (b2) having an average hydroxyl value of 120 to 600 (mg KOH/g), a cured resin good in physical properties (particularly, mechanical properties) required of sealants can be formed.
In particular, according to a composition obtained by using a castor oil-modified polyol (b2) having an average hydroxyl value of 300 to 400 (mg KOH/g), a cured resin good in physical properties required of sealants can be formed, and moreover improvements in the productivity of a sealant, and in its turn the productivity of hollow-fiber membrane modules (filter devices) can also be made.

The castor oil-modified polyol (b2) is preferably such that when the number average molecular weight (Mn) of a castor oil fatty acid monoester of a trimethylolalkane as determined by GPC measurement is regarded as 450, an area ratio of the castor oil-modified polyol (b2), whose number average molecular weight (Mn) is at least 450 as determined by the GPC measurement, is at least 85%, and a ratio (Mw/Mn) of the weight average molecular weight (Mw) to the number average molecular weight (Mn) is at most 1.5. According to a composition of the present invention obtained by using a castor oil-modified polyol (b2) satisfying these conditions, a cured resin (sealant) extremely little in the amount of matter dissolved out in water when immersed in the water can be formed. When these conditions are not satisfied, the amount of the matter dissolved out cannot be sufficiently controlled in the resulting sealant. Incidentally, in the GPC measurement, a calibration curve obtained from trifunctional polypropylene polyol was used.

The amount (degree) of the dissolved matter is measured by a testing method for dissolved matter in accordance with "Test of Aqueous Injection Containers" in "Testing Method for Plastic Drug Containers" prescribed in The Japanese Pharmacopoeia, and is indicated by using, as an index value, a difference in an amount of potassium permanganate consumed between a test liquid and a blank test liquid. In the present invention, this difference is preferably at most 1.0 mL, more preferably at most 0.7 mL, particularly preferably at most 0.5 mL.

A cured resin (sealant) formed from the composition of the present invention containing the castor oil-modified polyol (b2) as the polyol component making up the curing agent (B) is low in the temperature dependence of hardness and far excellent in adhesiveness and heat resistance, whereby the adhesive force to a housing can be retained at a high level even when a sealant (preferably, a membrane sealant used in hollow-fiber membrane modules or flat membrane modules) formed of the cured resin is bonded to the housing and then subjected to a steam sterilization treatment. The sealant may be used for a long period of time at a high temperature. The hollow-fiber membrane module (hollow-fiber membrane type filter device) produced by using the composition is also low in the temperature dependence (change of flow rate by the temperature) of filtration flow rate and the temperature dependency (change of fraction performance by the temperature) of fraction performance of the hollow-fiber membranes.
A cured resin (sealant) formed by a composition obtained by using a curing agent containing no castor oil-modified polyol (b2) together with the chief ingredient (A) is high in the temperature dependence of hardness and poor in adhesiveness and heat resistance (see Comparative Example 7 which will be described subsequently).

(2) Active hydrogen group-containing compound:
In the present invention, another active hydrogen group-containing compound (hereinafter referred to as "active hydrogen group-containing compound (b4)" than the castor oil-modified polyol (b2) may be contained in the curing agent (B).

As examples of the active hydrogen group-containing compound (b4), may be mentioned polyols such as low-molecular polyols, polyether polyols, polyester polyols, polylactone polyols, castor oil polyols (excluding castor oil-modified polyols (b2)) and polyolefin polyols. These polyols may be used either singly or in any combination thereof.
As specific examples thereof, may be mentioned the same compounds as the compounds exemplified as "the other polyol(s) (b3)" used for obtaining the isocyanate group-terminated prepolymer [II]. However, the polyfunctional polyether polyol (b1) is further included in "polyether polyols" used as the active hydrogen group-containing compound (b4).

As examples of the active hydrogen group-containing compound (b4), may also be mentioned amine compounds such as low-molecular polyamines and low-molecular aminoalcohols (for example, propylene oxide or ethylene oxide adducts of amino compounds such as ethylenediamine, such as N,N,N',N'-tetrakis[2-hydroxypropyl]ethylenediamine and N,N,N',N'-tetrakis[2-hydroxyethyl]ethylenediamine that are oxyalkylation derivatives of the amino compounds; mono-, di- and triethanolamines; and N-methyl-N,N'-diethanolamine).

The proportion [(b2)/(b4)] of the castor oil-modified polyol (b2) to the active hydrogen group-containing compound (b4) contained in the curing agent (B) is preferably 1/99 to 100/0, particularly preferably 100/0.

### <Mixing proportion of chief ingredient (A) to curing agent (B)>

In the compositions according to the present invention, a mixing proportion of the chief ingredient (A) to the curing agent (B) is such a proportion that a molar ratio (isocyanate group/active hydrogen group) of the isocyanate group contained in the isocyanate component (the isocyanate group-terminated prepolymer [I] and/or isocyanate group-terminated prepolymer [II]) making up the chief ingredient (A) to the active hydrogen group contained in the polyol component (essential castor oil-modified polyol (b2) and optional active hydrogen group-containing compound (b4)) making up the curing agent (B) amounts to preferably 0.8 to 1.6, more preferably 0.9 to 1.2, particularly preferably 1.0 to 1.1. According to a composition obtained in such a mixing ratio, a cured resin (sealant) excellent in durability and extremely little in the amount of matter dissolved out in water can be formed.

Incidentally, the compositions according to the present invention may contain a publicly known urethanation catalyst. As examples of the urethanation catalyst, may be mentioned metallic compound catalyst such as organotin compounds; and tertiary amine catalyst such as triethylenediamine (TEDA), tetramethylhexamethylenediamine (TMHMDA), pentamethyldiethylenetriamine (PMDETA), dimethylcyclohexylamine (DMCHA) and bisdimethylamino-ethyl ether (BDMAEA).

### <Sealant and hollow-fiber membrane module>

The production process of a sealant according to the present invention comprises curing the composition according to the present invention.
More specifically, the composition of the present invention comprising the chief ingredient (A) and the curing agent (B) is prepared at room temperature, and the isocyanate component making up the chief ingredient (A) and the polyol component making up the curing agent (B) are subjected to a reaction and curing under conditions of 0°C to 100°C, preferably 30°C to 80°C, more preferably 30°C to 60°C, whereby a sealant can be suitably formed.
Incidentally, as needed, each of the chief ingredient (A) and the curing agent (B) may be heated to 30 to 60°C before mixing them for the purpose of shortening a gelling time and lowering the viscosity of the resulting composition.

The sealant obtained by the production process according to the present invention can meet large-sized hollow-fiber membrane modules because it is obtained from the composition of the present invention having a long pot life.
The sealant obtained by the production process according to the present invention is excellent in adhesiveness, so that high adhesive force is gained between the sealant and a housing base material of a filter device, and moreover an end portion of a bundle of a plurality of hollow-fiber membranes can be strongly banded.
The sealant obtained by the production process according to the present invention is excellent in heat resistance, so that the adhesive force can be retained at a high level even when it is subjected to a steam sterilization treatment in a state bonded to an adherend such as a housing. For example, even when the sealant bonded to a housing composed of a polycarbonate resin is subjected to the steam sterilization treatment for 20 minutes under an atmosphere of 121°C, the retention of adhesive strength is at least 70%, preferably at least 85%, more preferably at least 90%, particularly preferably at least 95%, and so the sealant can sufficiently carry heat resistance required of sealants.
The sealant obtained by the production process according to the present invention is low in the temperature dependence of hardness, so that sealing performance can be surely secured in a wide temperature range.
Even when the sealant obtained by the production process according to the present invention is brought into contact with water, an amount of matter dissolved out in the water is extremely little.
The sealant obtained by the production process according to the present invention is not broken even when it is pressurized repeatedly about 50,000 times under conditions of 50°C, and thus sufficiently carries durability required of sealants.

Such excellent various performance properties are sufficiently developed even in those obtained from the composition (compositions according to the present invention) having a long pot life. Accordingly, the hollow-fiber membrane modules (hollow-fiber membrane type filter devices) obtained by sealing gaps between hollow-fiber membranes at an end portion of a bundle of a plurality of hollow-fiber membranes with the sealant obtained by curing the composition according to the present invention have such excellent durability as sufficiently withstands continuous use for a long period of time.

In addition, the compositions according to the present invention have a long pot life, and so extremely stable productivity can be achieved even in hollow-fiber membrane modules (hollow-fiber membrane type filter devices) that have tended to be enlarged in recent years.

The hollow-fiber membrane module obtained by the production process according to the present invention is obtained by sealing gaps between hollow-fiber membranes at an end portion of a bundle of a plurality of hollow-fiber membranes with the sealant obtained by curing the composition according to the present invention.
The hollow-fiber membrane module obtained by the production process according to the present invention can be produced by sealing gaps between hollow-fiber membranes at an end portion of a bundle of a plurality of hollow-fiber membranes with the composition according to the present invention, curing the composition to form a sealant (thereby sealing the gaps between hollow-fiber membranes with the sealant), and accommodating the bundle into a housing.
As a specific structure of the hollow-fiber membrane module (hollow-fiber membrane type filter device) obtained by the production process according to the present invention, may be mentioned the structure described in Japanese Patent Application Laid-Open No. 11-5023. However, the structure is not limited thereto.

### EXAMPLES

The present invention will hereinafter be described more specifically by the following Examples and Comparative Examples. However, the present invention is not to be construed to be limited by these examples.

### [Production Example 1: production of chief ingredient (A)]

The interior of a 2 L-sized four-necked flask equipped with a thermometer, a stirrer, a nitrogen-sealed tube and a condenser tube was purged with nitrogen. This flask was charged with 233 g of 4,4'-MDI "Millionate MT (trade name)" (product of Nippon Polyurethane Industry Co., Ltd.) and 591 g of a carbodiimide-modified product "Millionate MTL-C (trade name)" (product of Nippon Polyurethane Industry Co., Ltd., isocyanate group content = 28.6% by mass) of 4,4'-MDI, and the resultant liquid mixture was heated and stirred. At the time the temperature of the liquid mixture reached 50°C, 105 g of the following polyol (b31) and 71 g of the following polyol (b11) were added, and the resultant mixture was stirred and mixed for 3 hours at 70°C under a nitrogen atmosphere, thereby conducting a reaction to obtain an isocyanate group-terminated prepolymer [II] making up a chief ingredient (A). This prepolymer will hereinafter be referred to as "Chief Ingredient (A-1)". The isocyanate group content in Chief Ingredient (A-1) was 21.0% by mass, and the viscosity at 25°C was 3,400 mPa·s.

### [Production Example 2: production of chief ingredient (A)]

The interior of a 2 L-sized four-necked flask equipped with a thermometer, a stirrer, a nitrogen-sealed tube and a condenser tube was purged with nitrogen. This flask was charged with 234 g of 4,4'-MDI "Millionate MT (trade name)" and 596 g of a carbodiimide-modified product "Millionate MTL-C (trade name)" of 4,4'-MDI, and the resultant liquid mixture was heated and stirred. At the time the temperature of the liquid mixture reached 50°C, 136 g of the following polyol (b21) and 34 g of the following polyol (b11) were added, and the resultant mixture was stirred and mixed for 3 hours at 70°C under a nitrogen atmosphere, thereby conducting a reaction to obtain an isocyanate group-terminated prepolymer [II] making up a chief ingredient (A). This prepolymer will hereinafter be referred to as "Chief Ingredient (A-2)". The isocyanate group content in Chief Ingredient (A-2) was 21.0% by mass, and the viscosity at 25°C was 1,900 mPa·s.

### [Production Example 3: production of chief ingredient (A)]

The interior of a 2 L-sized four-necked flask equipped with a thermometer, a stirrer, a nitrogen-sealed tube and a condenser tube was purged with nitrogen. This flask was charged with 236 g of 4,4'-MDI "Millionate MT (trade name)" and 602 g of a carbodiimide-modified product "Millionate MTL-C (trade name)" of 4,4'-MDI, and the resultant liquid mixture was heated and stirred. At the time the temperature of the liquid mixture reached 50°C, 97 g of the following polyol (b21) and 65 g of the following polyol (b11) were added, and the resultant mixture was stirred and mixed for 3 hours at 70°C under a nitrogen atmosphere, thereby conducting a reaction to obtain an isocyanate group-terminated prepolymer [II] making up a chief ingredient (A). This prepolymer will hereinafter be referred to as "Chief Ingredient (A-3)". The isocyanate group content in Chief Ingredient (A-3) was 21.0% by mass, and the viscosity at 25°C was 3,200 mPa·s.

### [Production Example 4: production of chief ingredient (A)]

The interior of a 2 L-sized four-necked flask equipped with a thermometer, a stirrer, a nitrogen-sealed tube and a condenser tube was purged with nitrogen. This flask was charged with 239 g of 4,4'-MDI "Millionate MT (trade name)" and 607 g of a carbodiimide-modified product "Millionate MTL-C (trade name)" of 4,4'-MDI, and the resultant liquid mixture was heated and stirred. At the time the temperature of the liquid mixture reached 50°C, 62 g of the following polyol (b21) and 92 g of the following polyol (b11) were added, and the resultant mixture was stirred and mixed for 3 hours at 70°C under a nitrogen atmosphere, thereby.conducting a reaction to obtain an isocyanate group-terminated prepolymer [II] making up a chief ingredient (A). This prepolymer will hereinafter be referred to as "Chief Ingredient (A-4)". The isocyanate group content in Chief Ingredient (A-4) was 21.0% by mass, and the viscosity at 25°C was 5,600 mPa·s.

### [Production Example 5: production of chief ingredient (A)]

The interior of a 2 L-sized four-necked flask equipped with a thermometer, a stirrer, a nitrogen-sealed tube and a condenser tube was purged with nitrogen. This flask was charged with 235 g of 4,4'-MDI "Millionate MT (trade name)" and 599 g of a carbodiimide-modified product "Millionate MTL-C (trade name)" of 4,4'-MDI, and the resultant liquid mixture was heated and stirred. At the time the temperature of the liquid mixture reached 50°C, 133 g of the following polyol (b21) and 33 g of the following polyol (b12) were added, and the resultant mixture was stirred and mixed for 3 hours at 70°C under a nitrogen atmosphere, thereby conducting a reaction to obtain an isocyanate group-terminated prepolymer [II] making up a chief ingredient (A). This prepolymer will hereinafter be referred to as "Chief Ingredient (A-5)". The isocyanate group content in Chief Ingredient (A-5) was 21.0% by mass, and the viscosity at 25°C was 2,300 mPa·s.

### [Production Example 6: production of chief ingredient (A)]

The interior of a 2 L-sized four-necked flask equipped with a thermometer, a stirrer, a nitrogen-sealed tube and a condenser tube was purged with nitrogen. This flask was charged with 239 g of 4,4'-MDI "Millionate MT (trade name)" and 607 g of a carbodiimide-modified product "Millionate MTL-C (trade name)" of 4,4'-MDI, and the resultant liquid mixture was heated and stirred. At the time the temperature of the liquid mixture reached 50°C, 92 g of the following polyol (b21) and 62 g of the following polyol (b12) were added, and the resultant mixture was stirred and mixed for 3 hours at 70°C under a nitrogen atmosphere, thereby conducting a reaction to obtain an isocyanate group-terminated prepolymer [II] making up a chief ingredient (A). This prepolymer will hereinafter be referred to as "Chief Ingredient (A-6)". The isocyanate group content in Chief Ingredient (A-6) was 21.0% by mass, and the viscosity at 25°C was 3,800 mPa·s.

### [Production Example 7: production of chief ingredient (Comparative)]

The interior of a 2 L-sized four-necked flask equipped with a thermometer, a stirrer, a nitrogen-sealed tube and a condenser tube was purged with nitrogen. This flask was charged with 100 g of 4,4'-MDI "Millionate MT (trade name)" and 650 g of a carbodiimide-modified product "Millionate MTL-C (trade name)" of 4,4'-MDI, and the resultant liquid mixture was heated and stirred. At the time the temperature of the liquid mixture reached 50°C, 250 g of the following polyol (b31) was added, and the resultant mixture was stirred and mixed for 3 hours at 70°C under a nitrogen atmosphere, thereby conducting a reaction to obtain an isocyanate group-terminated prepolymer making up a comparative chief ingredient. This prepolymer will hereinafter be referred to as "Chief Ingredient (A-7)". The isocyanate group content in Chief Ingredient (A-7) was 19.0% by mass, and the viscosity at 25°C was 1,700 mPa·s.

### [Production Example 8: production of chief ingredient (A)]

The interior of a 2 L-sized four-necked flask equipped with a thermometer, a stirrer, a nitrogen-sealed tube and a condenser tube was purged with nitrogen. This flask was charged with 163 g of 4,4'-MDI "Millionate MT (trade name)" and 735 g of a carbodiimide-modified product "Millionate MTL-C (trade name)" of 4,4'-MDI, and the resultant liquid mixture was heated and stirred. At the time the temperature of the liquid mixture reached 50°C, 102 g of the following polyol (b11) was added, and the resultant mixture was stirred and mixed for 3 hours at 70°C under a nitrogen atmosphere, thereby conducting a reaction to obtain an isocyanate group-terminated prepolymer [I] making up a chief ingredient (A). This prepolymer will hereinafter be referred to as "Chief Ingredient (A-8)". The isocyanate group content in Chief Ingredient (A-8) was 23.5% by mass, and the viscosity at 25°C was 2,200 mPa·s.

### [Preparation Example 1: preparation of curing agent (B)]

A curing agent (B) composed of polyol (21) was provided (100 parts by mass). This agent will hereinafter be referred to as "Curing Agent (B-1)".

### [Preparation Example 2: preparation of curing agent (comparative)]

Comparative Curing Agents (B-2) to (B-6) were prepared by mixing polyols (100 parts by mass in total) in accordance with their corresponding formulations shown below.

· Curing Agent (B-2):
   Polyol (b21): 50 parts by mass, and polyol (b11): 50 parts by mass.
· Curing Agent (B-3):
   Polyol (b21): 50 parts by mass, and polyol (b12): 50 parts by mass.
· Curing Agent (B-4):
   Polyol (b31): 81 parts by mass, and polyol (b11): 19 parts by mass.
· Curing Agent (B-5):
   Polyol (b31): 81 parts by mass, and polyol (b12): 19 parts by mass.
· Curing Agent (B-6):
   Polyol (b31): 80 parts by mass, and polyol (b32): 20 parts by mass.

The polyols used for obtaining the above-described chief ingredients and curing agents are as follows.
(1) Polyol (b11) (corresponding to the polyfunctional polyether polyol (b1):
   A polyfunctional polyether polyol obtained by using sucrose as an initiator and adding propylene oxide thereto. Functionality of the initiator = 8.0, hydroxyl value = 455 (mg KOH/g), and number average molecular weight = 1,000.

(2) Polyol (b12) (corresponding to the polyfunctional polyether polyol (b1):
A polyfunctional polyether polyol obtained by using sorbitol as an initiator and adding propylene oxide thereto. Functionality of the initiator = 6.0, hydroxyl value = 550 (mg KOH/g), and number average molecular weight = 600.

(3) Polyol (b21) (corresponding to the castor oil-modified polyol (b2):
A trimethylolpropane-modified product "#1297X (trade name)" (product of Itoh Oil Mfg. Co., Ltd.) of castor oil. Average functionality = 3.0; hydroxyl value = 340 (mg KOH/g); and GPC measured values when the number average molecular weight (Mn) of a castor oil fatty acid monoester of a trimethylolalkane is regarded as 450: peak area ratio, whose Mn is at least 450, = 88%, and Mw/Mn = 1.42.

(4) Polyol (b31):
Castor oil "URIC H-30 (trade name)" (product of Itoh Oil Mfg. Co., Ltd.). Average functionality = 2.7; hydroxyl value = 160 (mg KOH/g); and GPC measured values when the number average molecular weight (Mn) of a castor oil fatty acid monoester of a trimethylolalkane is regarded as 450: peak area ratio, whose Mn is at least 450, = 99%, and Mw/Mn = 1.03.

(5) Polyol (b32):
N,N,N',N'-tetrakis[2-hydroxypropyl]ethylenediamine. Average functionality = 4.0, and hydroxyl value = 760 (mg KOH/g).

In the above, the GPC measurement was conducted in accordance with the following conditions and method.
(Measuring conditions)
(1) Measuring apparatus: "HLC-8120 (trade name) (product of Tosoh Corp.).
(2) Column: Four columns, in every two columns of which "TSKgel G2000HXL (trade name)" and "TSKgel G3000HXL (trade name)" (both, products of Tosoh Corp.) were respectively packed, were connected.
(3) Column temperature: 40°C.
(4) Detector: RI (refractive index) meter.
(5) Eluate: tetrahydrofuran (THF) (flow rate: 1 mL/min., 40°C)
(6) Calibration curve: Trifunctional polypropylene polyols having the following trade names (all, products of Sanyo Chemical Industries, Ltd.) were used to obtain a calibration curve.
   · "SANNIX GP-250" (number average molecular weight = 250)
   · "SANNIX GP-400" (number average molecular weight = 400)
   · "SANNIX GP-600" (number average molecular weight = 600)
   · "SANNIX GP-1000" (number average molecular weight = 1,000)
   · "SANNIX GP-3000" (number average molecular weight = 3,000)
   · "SANNIX GP-4000" (number average molecular weight = 4,000)
   · "SANNIX GP-5000" (number average molecular weight = 5,000).
(7) Sample solution: 10 ml of a THF solution of 0.05 g of a sample.

### [Measuring method]

With respect to a castor oil fatty acid monoester of a trimethylolalkane, its peak area ratio, weight average molecular weight (Mw) and number average molecular weight (Mn) were first determined from a chart obtained by detection of refractive index differences by using the calibration curve obtained from the trifunctional polypropylene polyols.
With respect to each sample prepared, its peak area ratio, Mw and Mn in the case where Mn of the first measured castor oil fatty acid monoester of the trimethylolalkane was regarded as 450 were then determined from a chart obtained by detection of refractive index differences based on the same calibration curve, and Mw/Mn was further calculated out based on these values.

### <Examples 1 to 7, Comparative Examples 1 to 7>

A chief ingredient and a curing agent were mixed in accordance with their corresponding combinations shown in Table 1 and Table 2 so as to give a liquid temperature of 35°C and a ratio (molar ratio) of isocyanate group/active hydrogen group of 1.00, thereby obtaining respective polyurethane resin forming compositions.

### <Evaluation of polyurethane resin forming composition (cured product)>

### [Hardness measurement of cured product]

After each of the polyurethane resin forming compositions of Examples 1 to 7 and Comparative Examples 1 to 7 was deaerated by pressure reduction (for 3 minutes at 10 to 20 kPa), it was charged into a stainless steel mold (100 mm x 10 mm x 8 mm). This was left at rest for 7 days at 25°C to cure the composition and then released from the mold, thereby obtaining a cured product (cured resin).
With respect to each of the thus-obtained cured products, its Shore D hardness was measured under respective temperature conditions of 10°C, 25°C and 70°C. Measured results and hardness ratios (hardness at 70°C/hardness at 25°C) are shown in Table 1 and Table 2.

### [Adhesiveness to housing]

After each of the polyurethane resin forming compositions of Examples 1 to 7 and Comparative Examples 1 to 7 was deaerated by pressure reduction (for 3 minutes at 10 to 20 kPa), it was charged into a housing (44 mm x 10 mm) made of polycarbonate (forming a layer of the composition on the housing) and left at rest for 7 days at 25°C to cure the composition, thereby producing a specimen with a cured product (layer) formed on the housing. With respect to each of the thus-obtained specimens, adhesive strength C₀ (= peel force/adhesion area) of the cured product to the housing was measured.
After each of the resultant specimens was subjected to a steam sterilization treatment (121°C for 20 minutes), the adhesive strength C was measured in the same manner as described above.
The initial adhesive strength C₀, adhesive strength C after the steam sterilization treatment and retention (C/C₀) of the adhesive strength are shown in Table 1 and Table 2.

### [Dissolved matter test]

After each of the polyurethane resin forming compositions of Examples 1 to 7 and Comparative Examples 1 to 7 was deaerated by pressure reduction (for 3 minutes at 10 to 20 kPa), it was charged on release paper (forming a layer of the composition on the release paper) so as to give a thickness of about 1 to 2 mm and left at rest for 7 days at 25°C to cure the composition, and the release paper was then released to obtain a cured product.
With respect to each of the thus-obtained cured products, an amount (an index value indicated by a difference in an amount of potassium permanganate consumed between a test liquid and a blank test liquid) of dissolved matter was measured by a dissolved matter testing method in accordance with "Test of Aqueous Injection Containers" in "Testing Method for Plastic Drug Containers" prescribed in The Japanese Pharmacopoeia.
Specifically, each of the resultant cured products was finely cut, immersed in water and subjected to a high pressure steam sterilization treatment for 1 hour at 121°C, thereby obtaining a test liquid.
On the other hand, a liquid (i.e., water alone), in which no cured product was immersed as a blank, was subjected to the same treatment, thereby obtaining a blank test liquid. With respect to both liquids, amounts of potassium permanganate consumed were measured to determine a difference in the amount consumed between both liquids. This difference is an index value to the amount of the dissolved matter, and the amount of the dissolved matter comes to be little as this value is smaller. The differences (index values) in the consumed amount are shown in Table 1 and Table 2.

### [Fraction performance as water purifier]

After each of the polyurethane resin forming compositions of Examples 1 to 7 and Comparative Examples 1 to 7 was deaerated by pressure reduction (for 3 minutes at 10 to 20 kPa), this composition was used to produce a columnar water purifier (length of a hollow-fiber part: 600 mm; diameter of casing sections at both ends: 50 mm) comprising a hollow-fiber membrane module produced by sealing gaps between hollow-fiber membranes at an end portion of a bundle of a plurality of hollow-fiber membranes with a sealant obtained by curing the composition.
This water purifier was used to filter a liquid to be treated, which was obtained by dispersing polystyrene latex particles having a prescribed particle diameter in a 0.1% by mass solution of a surfactant (polyethylene glycol-p-isooctyl phenyl ether), and a concentration of the latex particles in the resultant filtrate was measured at a wavelength of 320 nm by means of a Hitachi spectrophotometer (U-3400) to determine a particle diameter at a trapping rate of 90%, thereby evaluating the water purifier as to variations of the fraction particle diameter. The results are shown in Table 1 and Table 2.

### [Pot life of polyurethane resin forming composition]

After each of the polyurethane resin forming compositions (total of the chief ingredient and the curing agent: 100 g) of Examples 1 to 7 and Comparative Examples 1 to 7 was deaerated by pressure reduction (for 3 minutes at 10 to 20 kPa), its viscosity increase was traced by means of a rotational viscometer (B type viscometer, No. 4 rotor) under an atmosphere of 25°C, thereby regarding the time from the point of time the mixing of the chief ingredient and the curing agent was started up to the time the viscosity of the composition reached 50,000 mPa·s as a pot life. The results are shown in Table 1 and Table 2.

[Table 1]

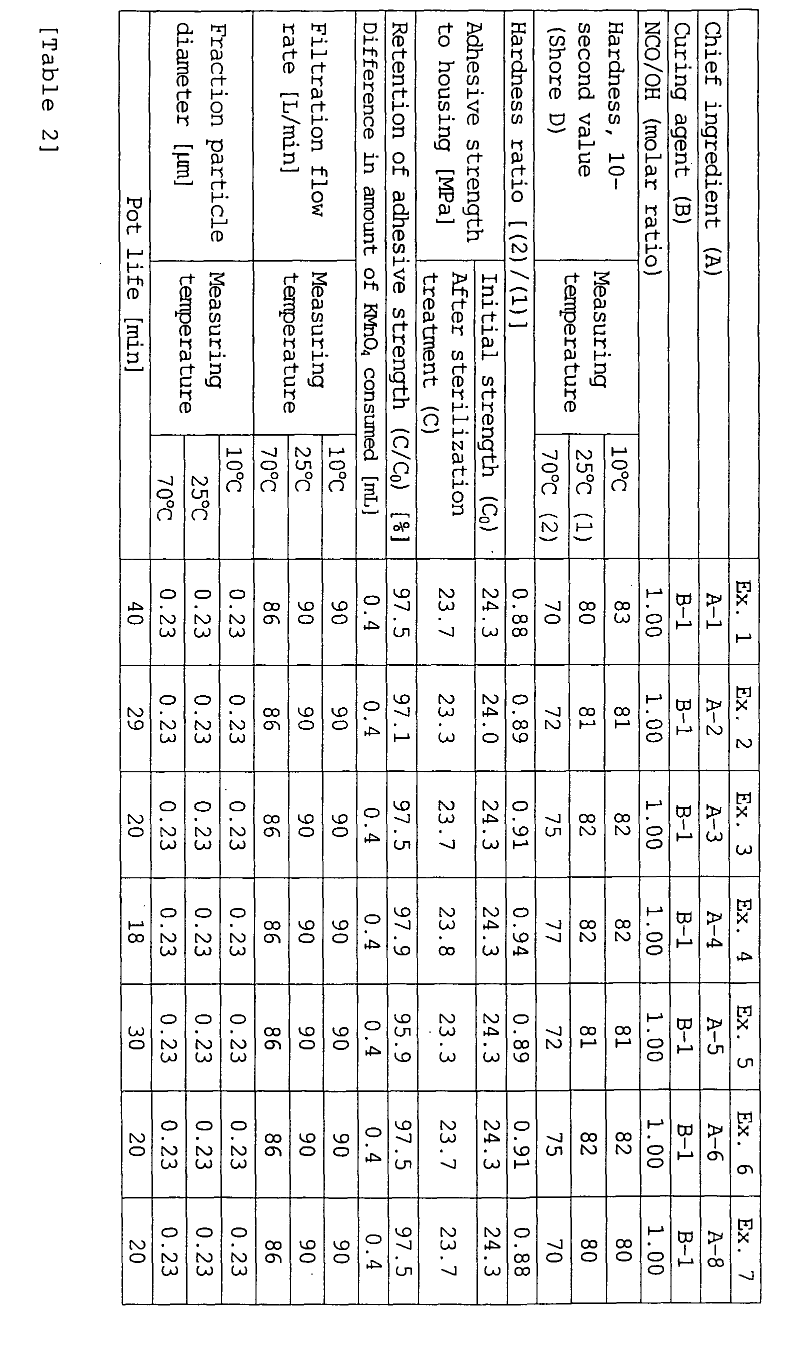

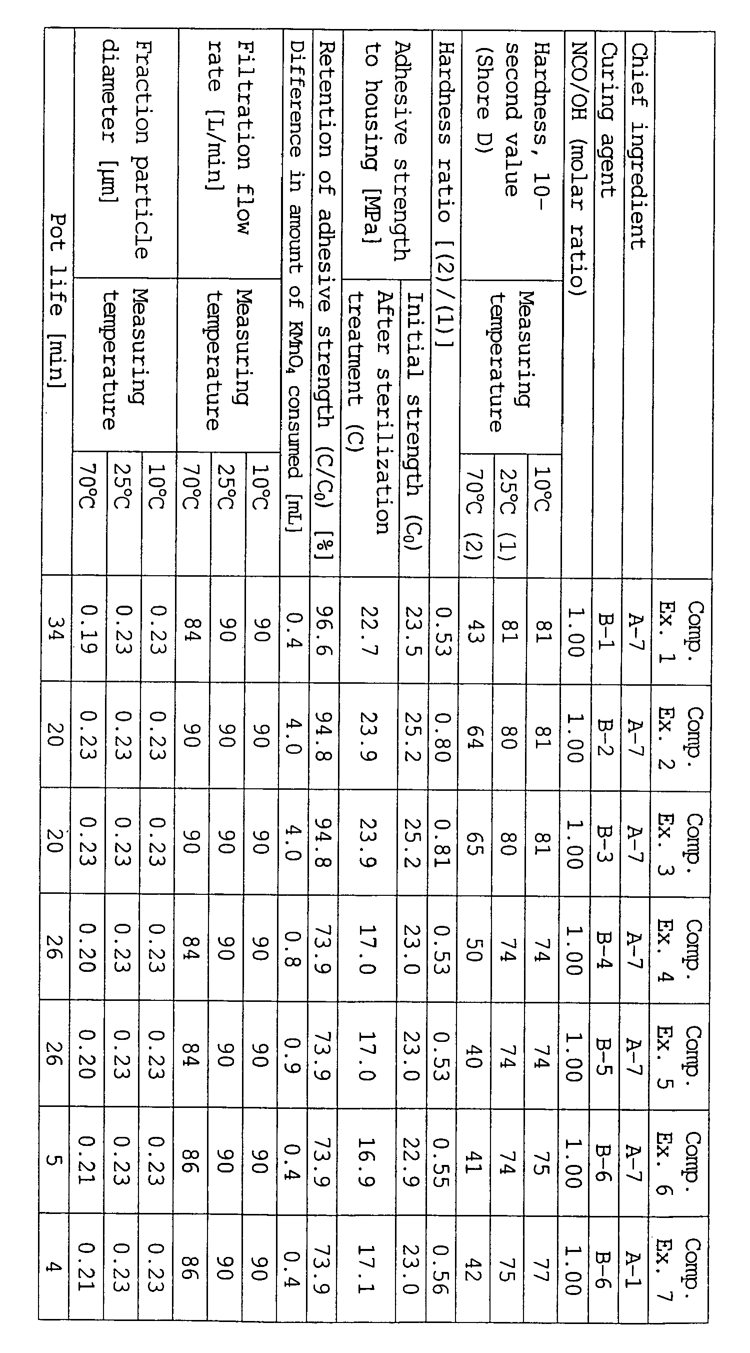

### <Example 8>

The polyurethane resin forming composition of Example 2 was used to seal gaps between hollow-fiber membranes at both end portions of a bundle of 9,000 polysulfone hollow-fiber membranes and between a cartridge case (inner diameter: 15.4 cm, made of PVC), in which the bundle had been inserted, and the bundle by a centrifugal bonding at 35°C for 90 minutes, and this cartridge case was left at rest for a week at an atmosphere of 25°C.
The cartridge case, in which the bundle of the hollow-fiber membranes had been inserted in the above-described manner, was detachably accommodated into a housing through the sealant to produce a hollow-fiber membrane module as a filter device. This hollow-fiber membrane module was used to conduct a filtration operation and back pressure filtration of water at 50°C under a maximum water pressure of 200 kPa repeatedly 50,000 cycles. As a result, the sealant portion and the hollow-fiber membranes were not broken.

### <Comparative Example 8>

A hollow-fiber membrane module was produced in the same manner as in Example 8 except that the polyurethane resin forming composition of Comparative Example 4 was used, and the filtration operation and back pressure filtration were conducted repeatedly in the same manner as in Example 8. However, the sealant portion was broken when 27,000 cycle had elapsed.

### <Example 9>

The polyurethane resin forming composition of Example 3 was used to seal gaps between hollow-fiber membranes at both end portions of a bundle of 22,000 polysulfone hollow-fiber membranes and between a cartridge case (inner diameter: 22.1 cm, made of polycarbonate), in which the bundle had been inserted, and the bundle by a centrifugal bonding at 35°C for 90 minutes, and this cartridge case was left at rest for a week at an atmosphere of 25°C.
The cartridge case, in which the bundle of the hollow-fiber membranes had been inserted in the above-described manner, was detachably accommodated into a housing through the sealant to produce a hollow-fiber membrane module as a large-sized filter device. This hollow-fiber membrane module was used to conduct a filtration operation and back pressure filtration of water at 50°C under a maximum water pressure of 200 kPa repeatedly up to 50,000 cycles. As a result, the sealant portion and the hollow-fiber membranes were not broken.

### <Comparative Example 9>

It was tried to produce a hollow-fiber membrane module in the same manner as in Example 8 except that the polyurethane resin forming composition of Comparative Example 7 was used. However, a lack of a seal slightly occurred to fail the production.

As shown in Table 1, the polyurethane resin forming compositions according to Examples 1 to 7 all have a long pot life, and the cured products (polyurethane resins) of these compositions are all low in the temperature dependence of hardness (little in change of hardness), high in the retention (C/C₀) of adhesive strength to a housing base material even when they are subjected to a steam sterilization treatment for a long period of time at a high temperature, extremely little in the amount of matter dissolved out in water (good in non-staining property in water) and good in fraction performance.
On the other hand, as shown in Table 2, the cured product of the composition of Comparative Example 1 using, as a chief ingredient, an isocyanate group-terminated prepolymer obtained without using the polyfunctional polyether polyol (b1) was high in the temperature dependence of hardness.
The cured products of the compositions of Comparative Examples 2 and 3 using the polyfunctional polyether polyol (b1) only as a constituent of the curing agent were great in the amount of matter dissolved out in water.
The cured products of the compositions of Comparative Examples 4 and 5 using the polyfunctional polyether polyol (b1) only as a constituent of the curing agent without using the castor oil-modified polyol (b2) as a constituent of the curing agent were high in the temperature dependence of hardness, low in the retention (C/C₀) of adhesive strength and great in the amount of matter dissolved out in water.
The composition of Comparative Example 6 using, as the chief ingredient, the isocyanate group-terminated prepolymer obtained without using the polyfunctional polyether polyol (b1) and using no castor oil-modified polyol (b2) as a constituent of the curing agent, and the composition of Comparative Example 7 using no castor oil-modified polyol (b2) as a constituent of the curing agent both had a short pot life, and the cured products thereof were both high in the temperature dependence of hardness and low in the retention (C/C₀) of adhesive strength.

The hollow-fiber membrane module of Example 8 produced by using the composition (composition of the present invention) of Example 2 is far excellent in durability against repeated pressurization compared with the hollow-fiber membrane module of Comparative Example 8 produced by using the composition of Comparative Example 4.

Further, the composition (composition of the present invention) of Example 3 can be surely applied to the production of large-sized modules such as the hollow-fiber membrane module of Example 9. The hollow-fiber membrane module of Example 9 has excellent durability against repeated pressurization. On the other hand, according to the composition of Comparative Example 7, no large-sized hollow-fiber membrane module can be produced as shown in Comparative Example 9.

### INDUSTRIAL APPLICABILITY

As described above, the cured products (sealants) of the polyurethane resin forming compositions according to the present invention have many excellent performance properties, in particular, excellent low soluble matter-containing property. Accordingly, the cured products can be suitably used as sealants (binding materials) for hollow-fiber membrane modules (hollow-fiber membrane type filter devices) making up medical and industrial separating apparatus. Specific examples of these medical and industrial separating apparatus include plasma separators, artificial lungs, artificial kidneys, artificial livers, and household and industrial water treatment apparatus.

The cured products of the polyurethane resin forming compositions according to the present invention are excellent in various properties, for example, hardness, tensile strength and adhesiveness, so that they may also be used as various kinds of industrial sealants, for example, electrical, automotive, building and civil engineering sealants or cushioning materials, and as compositions for obtaining industrial rolls for paper making, iron manufacture, printing or the like or OA (Office Automation) instrument parts such as paper feeding rolls.

## Claims

1. A polyurethane resin forming composition comprising a chief ingredient (A) containing an isocyanate component, and a curing agent (B) containing a polyol component,
wherein an isocyanate group-terminated prepolymer obtained by reacting an isocyanate group-containing compound (a1) with a polyfunctional polyether polyol (b1) obtained by using, as an initiator, a compound having a functionality of at least 6 is contained as the isocyanate component making up the chief ingredient (A), and
a castor oil-modified polyol (b2) obtained from castor oil and/or a castor oil fatty acid and a trimethylolalkane is contained as the polyol component making up the curing agent (B).

2. A polyurethane resin forming composition comprising a chief ingredient (A) containing an isocyanate component, and a curing agent (B) containing a polyol component,
wherein an isocyanate group-terminated prepolymer obtained by reacting an isocyanate group-containing compound (a1); a polyfunctional polyether polyol (b1) obtained by using, as an initiator, a compound having a functionality of at least 6; and other polyol(s) (b3) is contained as the isocyanate component making up the chief ingredient (A), and
a castor oil-modified polyol (b2) obtained from castor oil and/or a castor oil fatty acid and a trimethylolalkane is contained as the polyol component making up the curing agent (B).

3. The polyurethane resin forming composition according to claim 2, wherein at least a part of the other polyol(s) (b3) used for obtaining the isocyanate group-terminated prepolymer is the castor oil-modified polyol (b2).

4. A process for production of a sealant, comprising curing the polyurethane resin forming composition according to any one of claims 1 to 3.

5. A process for production of a hollow-fiber membrane module, comprising the step of sealing gaps between hollow-fiber membranes at an end portion of a bundle of a plurality of hollow-fiber membranes with a sealant obtained by curing the polyurethane resin forming composition according to any one of claims 1 to 3.
